(19) Europäisches Patentamt
European Patent Office
Office européen des brevets

(11) **EP 2 887 711 B1**

(12) **EUROPEAN PATENT SPECIFICATION**

(45) Date of publication and mention
of the grant of the patent:
**27.07.2022 Bulletin 2022/30**

(21) Application number: **14187448.7**

(22) Date of filing: **02.10.2014**

(51) International Patent Classification (IPC):
**H04W 8/00** (2009.01)     **H04W 76/14** (2018.01)
**H04W 72/04** (2009.01)

(52) Cooperative Patent Classification (CPC):
**H04W 8/005; H04W 76/14;** H04W 72/0413

(54) **METHOD AND APPARATUS FOR SUPPORTING DEVICE-TO-DEVICE (D2D) DISCOVERY IN A WIRELESS COMMUNICATION SYSTEM**

VERFAHREN UND VORRICHTUNG ZUR UNTERSTÜTZUNG VON VORRICHTUNG-ZU-VORRICHTUNG (D2D)-ERFASSUNG IN EINEM DRAHTLOSEN KOMMUNIKATIONSSYSTEM

PROCÉDÉ ET APPAREIL POUR SUPPORTER LA DÉCOUVERTE DE DISPOSITIF À DISPOSITIF (D2D) DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.10.2013 US 201361886850 P**

(43) Date of publication of application:
**24.06.2015 Bulletin 2015/26**

(73) Proprietor: **Innovative Sonic Corporation**
**Taipei City 11491 (TW)**

(72) Inventors:
• **Kuo, Richard Lee-Chee**
**Taipei City 11491 (TW)**
• **Guo, Yu-Hsuan**
**Taipei City 11491 (TW)**

(74) Representative: **Hoefer & Partner Patentanwälte mbB**
**Pilgersheimer Straße 20**
**81543 München (DE)**

(56) References cited:
**WO-A1-2015/023360     WO-A2-2013/181515**

• **ZTE: "Study on D2D Communication", 3GPP DRAFT; R1-133148 D2D COMMUNICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Barcelona, Spain; 20130819 - 20130823 10 August 2013 (2013-08-10), XP050716360, Retrieved from the Internet: URL:http://www.3gpp.org/ftp/tsg_ran/WG1_RL1/TSGR1_74/Docs/ [retrieved on 2013-08-10]**
• **SAMSUNG: "Resource Configuration & Selection for D2D Direct Discovery", 3GPP DRAFT; R2-132526-RESOURCE CONFIGURATION & SELECTION FOR D2D DIRECT DISCOVERY, 3RD GENERATION PARTNERSHIP PROJECT (3GPP), MOBILE COMPETENCE CENTRE ; 650, ROUTE DES LUCIOLES ; F-06921 SOPHIA-ANTIPO , vol. RAN WG2, no. Barcelona, Spain; 20130819 - 20130823 9 August 2013 (2013-08-09), XP050718220, Retrieved from the Internet: URL:http://www.3gpp.org/ftp/tsg_ran/WG2_RL2/TSGR2_83/Docs/ [retrieved on 2013-08-09]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **QUALCOMM INCORPORATED: "Aspects of D2D Discovery", 3GPP DRAFT; R2-132446, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Barcelona, Spain; 20130819 - 20130823 9 August 2013 (2013-08-09), XP050718178, Retrieved from the Internet: URL:http://www.3gpp.org/ftp/tsg_ran/WG2_RL 2/TSGR2_83/Docs/ [retrieved on 2013-08-09]**

**Description**

FIELD

This disclosure generally relates to wireless communication networks, and more particularly, to a method and apparatus for supporting D2D (Device-To-Device) discovery in a wireless communication system according to the pre-characterizing parts of independent claims 1 and 9, respectively. Such a method and apparatus are described in 3GPP documents R2-132526 and R2-132446.

BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard.

SUMMARY

A Method and an apparatus are disclosed for supporting D2D (Device-To-Device) discovery in a wireless communication system and are defined in independent claims 1, and 9, respectively. The respective dependent claims define respective preferred embodiments thereof, respectively. The method includes the UE receives a SIB (system information block) and does not monitor D2D discovery signal(s) if a subframe for receiving the SIB collides with a D2D discovery subframe.

Embodiments that do not fall under the scope of the claims are to be considered as examples helpful to understand the invention.

BRIEF DESCRIPTION OF THE DRAWINGS

FIG. 1 shows a diagram of a wireless communication system according to one exemplary embodiment.

FIG. 2 is a block diagram of a transmitter system (also known as access network) and a receiver system (also known as user equipment or UE) according to one exemplary embodiment.

FIG. 3 is a functional block diagram of a communication system according to one exemplary embodiment.

FIG. 4 is a functional block diagram of the program code of FIG. 3 according to one exemplary embodiment.

FIG. 5 is FIG. 5 is a reproduction of a table in Section 7.2 of 3GPP TS36.304 describing FDD (Frequency Division Duplex) subframe patterns.

FIG. 6 is a reproduction of a table in Section 7.2 of 3GPP TS36.304 describing subframe patterns for all UL (Uplink)/DL (Downlink) configurations in a TDD (Time Division Duplex) context.

FIG. 7 is a reproduction of Table 8.1.2.1-1 of 3GPP TS36.133 describing two measurement gap pattern configurations supported by the UE.

FIG. 8 illustrates collisions between Paging Occasions and D2D discovery subframes useful for understanding the invention.

FIG. 9 illustrates collisions between Measurement Gaps and D2D discovery subframes useful for understanding the invention.

FIG. 10 is a flow chart useful for understanding the invention.

FIG. 11 is a flow chart useful for understanding the invention.

FIG. 12 is a flow chart according to one exemplary embodiment according to the invention.

DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including Document Nos. TS36.331 V11.4.0, "E-UTRA RRC protocol specification"; SP-110638, "WID on Proposal for a study on Proximity-based Services"; TR22.803-c20, "Feasibility Study for Proximity Services (ProSe)"; R1-132503, "Techniques for D2D Discovery"; R2-132526, "Resource Configuration & Selection for D2D Direct Discovery"; R2-133215, "UE state for D2D Direct Discovery"; R2-133382, "Discussion on idle mode UE Discovery"; R2-133482, "D2D Discovery"; TS36.304 V11.3.0, "E-UTRA UE procedures in idle mode"; and TS36.133 V11.4.0, "E-UTRA Requirements for support of radio resource management". The standards and documents listed above are hereby expressly incorporated by reference in their entirety.

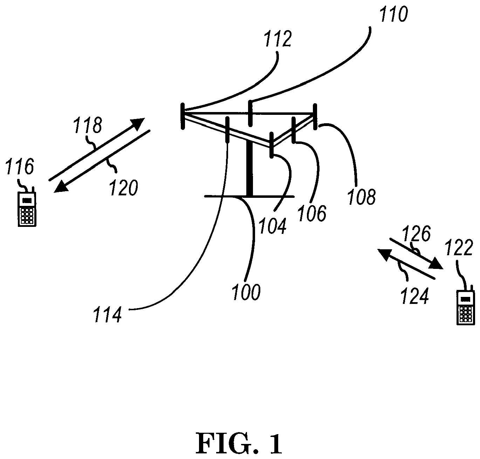

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an evolved Node B (eNB), or some other terminology. An access terminal (AT) may also be called user equipment (UE), a wireless communication device, terminal, access terminal or some other terminology.

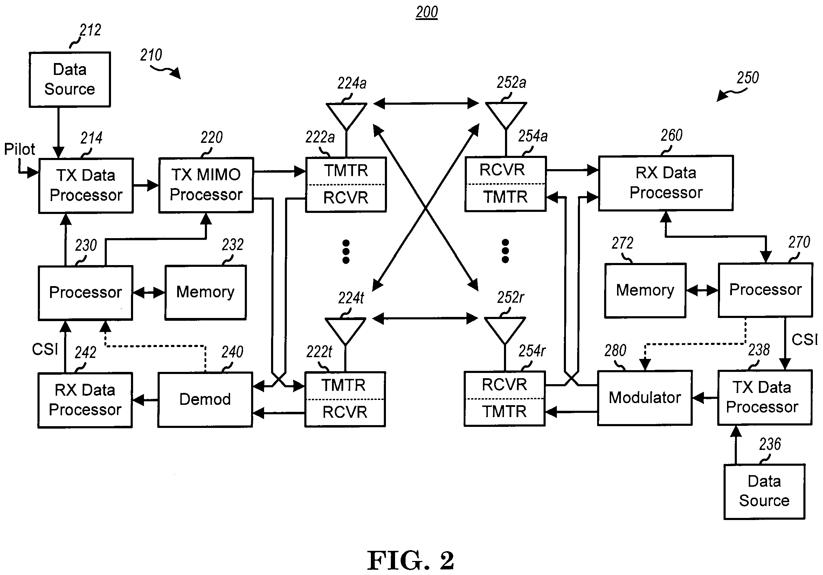

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides $N_T$ modulation symbol streams to $N_T$ transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. $N_T$ modulated signals from transmitters 222a through 222t are then transmitted from $N_T$ antennas 224a through 224t, respectively.

At receiver system 250, the transmitted modulated signals are received by $N_R$ antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the $N_R$ received symbol streams from $N_R$ receivers 254 based on a particular receiver processing technique to provide $N_T$ "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

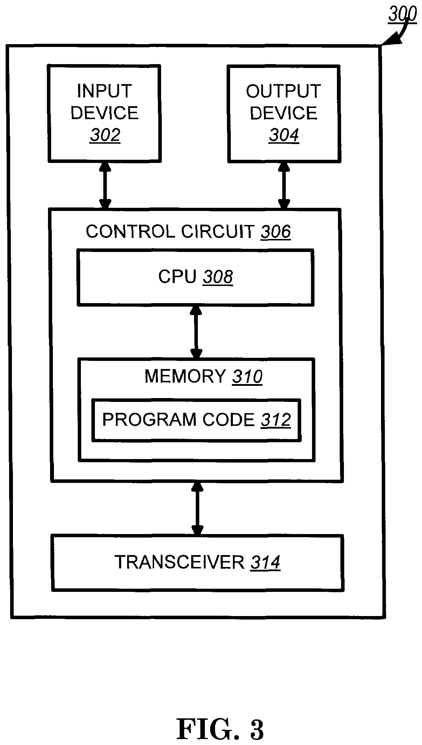

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly.

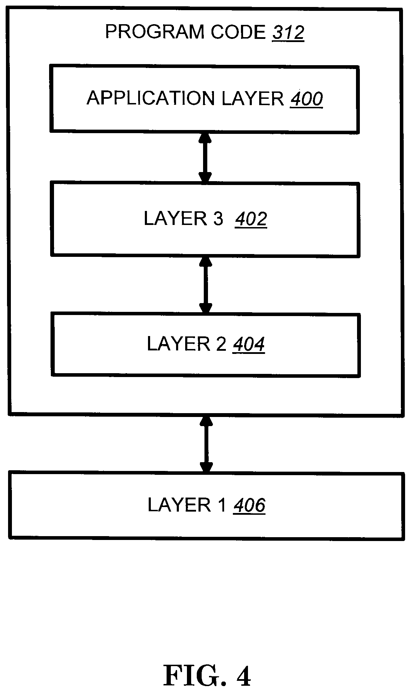

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

For LTE or LTE-A systems, the Layer 2 portion may include a Radio Link Control (RLC) layer and a Medium Access Control (MAC) layer. The Layer 3 portion may include a Radio Resource Control (RRC) layer.

3GPP SP-110638 proposes a new study item on proximity-based services (ProSe). 3GPP SP-110638 provides the following justification and objective for the study item:

### *3 Justification*

Proximity-based applications and services represent a recent and enormous socio-technological trend. The principle of these applications is to discover instances of the applications running in devices that are within proximity of each other, and ultimately also exchange application-related data. In parallel, there is interest in proximity-based discovery and communications in the public safety community.

Current 3GPP specification are only partially suited for such needs, since all such traffic and signalling would have to be routed in the network, thus impacting their performance and adding un-necessary load in the network. These current limitations are also an obstacle to the creation of even more advanced proximity-based applications.

In this context, 3GPP technology, has the opportunity to become the platform of choice to enable proximity-based discovery and communication between devices, and promote a vast array of future and more advanced proximity-based applications.

## *4 Objective*

The objective is to study use cases and identify potential requirements for an operator network controlled discovery and communications between devices that are in proximity, under continuous network control, and are under a 3GPP network coverage, for:

1. Commercial/social use

2. Network offloading

3. Public Safety

4. Integration of current infrastructure services, to assure the consistency of the user experience including reachability and mobility aspects
Additionally, the study item will study use cases and identify potential requirements for

5. Public Safety, in case of absence of EUTRAN coverage (subject to regional regulation and operator policy, and limited to specific public-safety designated frequency bands and terminals)

Use cases and service requirements will be studied including network operator control, authentication, authorization, accounting and regulatory aspects.
The study does not apply to GERAN or UTRAN.
Furthermore, 3GPP TR22.803-c20 defines a ProSe discovery, which contains an open [ProSe] discovery and a restricted [ProSe] discovery, as follows:

## 3.1 Definitions

**ProSe Discovery:** a process that identifies that a UE is in proximity of another, using E-UTRA.
**Open [ProSe] Discovery:** is ProSe Discovery without explicit permission from the UE being discovered.
**Restricted [ProSe] Discovery:** is ProSe Discovery that only takes place with explicit permission from the UE being discovered.
In RANI#73 meeting, the following points were concluded as working assumptions:

- It is assumed that D2D operates in UL spectrum (in case of FDD) or UL subframes of the cell giving coverage (in case of TDD except when out of coverage)
  ∘ Use of DL subframes in case of TDD can be studied further

- It is assumed that D2D transmission/reception does not use full duplex on a given carrier

It is noted that D2D stands for Device to Device and ProSe discovery is also called D2D discovery. In addition, 3GPP R1-132503 discusses radio resources for D2D discovery and interactions between D2D discovery and wide area network (WAN) communication as follows:

3.1 Reserving Resources for Discovery

We propose that network reserve periodic resources in uplink sub-frames for discovery (*Design Principles 2, 3 & 4*). The uplink sub-frames with resources reserved for discovery should be mostly contiguous. The contiguous allocation helps reduce power consumption of discovery. This is illustrated with an example in Figure 3 below where 64 contiguous uplink sub-frames have resources reserved for discovery every 10 seconds.

[Figure 3 in Section 3.1 has been omitted]

We call the period with which resources are reserved a "discovery period" and sub-frames with resources reserved for discovery "discovery sub-frames".
A UE participating in discovery will select a discovery resource among the sub-frames with resources reserved for discovery. The exact definition of a discovery resource is discussed later. The UE will transmit its discovery signal on its selected discovery resource every discovery period. The UE will also listen for discovery signals of other UEs on other discovery sub-frames (Design Principles 2 & 4).

Network can inform UEs of discovery sub-frames via a SIB broadcast. Such allocation can be done in a deployment wide manner in a synchronous deployment. This enables inter-cell discovery in a power efficient manner. In an asynchronous deployment, the allocation can be done on a per cell basis. The eNodeB of a cell can broadcast its allocation along with its neighbouring cells allocation in the SIB. Here UEs need to listen for discovery signals of UEs camped in different cells.

**Proposal 1:** Network reserves periodically occurring uplink sub-frames that will be used for discovery.

3.5 Coexistence with WAN Communication

To enable harmonious coexistence between WAN and discovery, the eNodeB should not schedule any new PUSCH transmission on discovery sub-frames. Any on-going HARQ transmissions can be suspended by the eNodeB and can be reactivated on non discovery sub-frames.

Note that since discovery sub-frames is a small fraction of uplink sub-frames (Design Principle 8) (0.64% in Figure 2) the impact of discovery on WAN will be minimal.

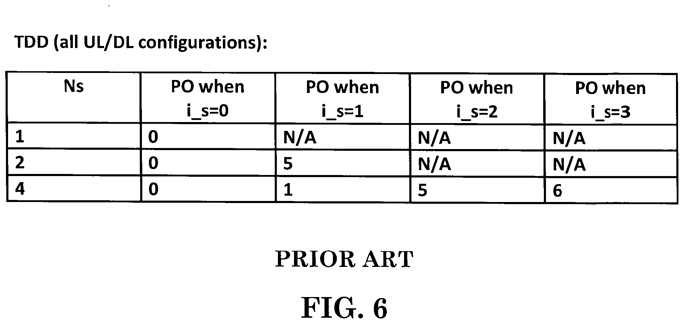

To further enable more harmonious coexistence, the discovery sub-frame allocation can be made non-contiguous. This is illustrated in Figure 6.

[Figure 6 in Section 3.5 has been omitted]

Here discovery sub-frames are interspersed by WAN uplink sub-frames every 5 sub-frames. Such interspersing of sub-frames can be used to minimize the disruption to low delay traffic (such as voice) which is scheduled in a semi-persistent manner.

Note interspersing discovery sub-frames with uplink sub-frames can lead to higher power consumption for UEs participating in discovery. So discovery sub-frames should be interspersed by only a small number of uplink sub-frames.

**Proposal 9:** Interleave discovery sub-frames with small number of uplink sub-frames

In general, R2-132526 discusses issues similar to 3GPP R1-132503, and raises the following proposals:

- Proposal 1: The requirements/observations mentioned in this section 2.3.1 should be considered for discovery resource configuration

- Proposal 2: Periodic Allocation of Common Discovery Resources (i.e. Discovery sub frames)

- Proposal 3: Broadcasting the Discovery Resource Configuration (i.e. Discovery resource cycle and discovery resource interval) using SI message

- Proposal 4: Discovery sub frames should be staggered in the discovery resource interval to minimize the impact to latency sensitive traffic and UL HARQ operation of legacy UEs

- Proposal 5: The pattern of discovery and non discovery subframes in discovery resource interval should be discussed

- Proposal 6: The need for updating the discovery resource configuration and method to signal the updated discovery resource configuration should be discussed

- Proposal 7: Both contention based resource selection and dedicated resource assignment should be considered for transmitting discovery information

- Proposal 8: D2D-enabled UE monitoring the discovery information should monitors all the discovery resources configured for D2D direct discovery.

In addition, it is proposed to support D2D discovery irrespective of the current RRC (Radio Resource Control) state of a UE (User Equipment) as discussed in 3GPP R2-133215, R2-133382, and R2-133482. The implication is that there is no need for a UE in RRC idle mode to enter RRC connected mode for transmitting or receiving D2D discovery signals.

3GPP TS36.331 specifies the purpose of a paging procedure as follows:

**5.3.2 Paging**

**5.3.2.1 General**

The purpose of this procedure is:

- to transmit paging information to a UE in RRC_IDLE and/ or;

- to inform UEs in RRC_IDLE and UEs in RRC_CONNECTED about a system information change and/ or;

- to inform about an ETWS primary notification and/ or ETWS secondary notification and/ or;

- to inform about a CMAS notification.

The paging information is provided to upper layers, which in response may initiate RRC connection establishment, e.g. to receive an incoming call.

3GPP TS36.331 also specifies the following ways for a UE to receive Earthquake and Tsunami Warning System (ETWS) and Commercial Mobile Alert Service (CMAS) notifications:

**5.2.1.4 Indication of ETWS notification**

ETWS primary notification and/ or ETWS secondary notification can occur at any point in time. The *Paging* message is used to inform ETWS capable UEs in RRC_IDLE and UEs in RRC_CONNECTED about presence of an ETWS primary notification and/ or ETWS secondary notification. If the UE receives a *Paging* message including the *etws-Indication,* it shall start receiving the ETWS primary notification and/ or ETWS secondary notification according to *schedulingInfoList* contained in *SystemInformationBlockType1.* If the UE receives *Paging* message including the *etws-Indication* while it is acquiring ETWS notification(s), the UE shall continue acquiring ETWS notification(s) based on the previously acquired *schedulingInfoList* until it re-acquires *schedulingInfoList* in *SystemInformationBlockType1.*
NOTE: The UE is not required to periodically check *schedulingInfoList* contained in *SystemInformationBlockType1,* but *Paging* message including the *etws-Indication* triggers the UE to re-acquire *schedulingInfoList* contained in *SystemInformationBlockType1* for scheduling changes for *SystemInformationBlockType10* and *SystemInformation-BlockTypell.* The UE may or may not receive a *Paging* message including the *etws-Indication* and/or *systemInfoModification* when ETWS is no longer scheduled.
ETWS primary notification is contained in *SystemInformationBlockType10* and ETWS secondary notification is contained in *SystemInformationBlockType11.* Segmentation can be applied for the delivery of a secondary notification. The segmentation is fixed for transmission of a given secondary notification within a cell (i.e. the same segment size for a given segment with the same *messageIdentifier, serialNumber* and *warningMessageSegmentNumber*). An ETWS secondary notification corresponds to a single *CB data* IE as defined according to TS 23.041 [37].

**5.2.1.5 Indication of CMAS notification**

CMAS notification can occur at any point in time. The *Paging* message is used to inform CMAS capable UEs in RRC_IDLE and UEs in RRC_CONNECTED about presence of one or more CMAS notifications. If the UE receives a *Paging* message including the *cmas-Indication,* it shall start receiving the CMAS notifications according to *schedulingInfoList* contained in *SystemInformationBlockType1.* If the UE receives *Paging* message including the *cmas-Indication* while it is acquiring CMAS notification(s), the UE shall continue acquiring CMAS notification(s) based on the previously acquired *schedulingInfoList* until it re-acquires *schedulingInfoList* in *SystemInformationBlockType1.*
NOTE: The UE is not required to periodically check *schedulingInfoList* contained in *SystemInformationBlockType1,* but *Paging* message including the *cmas-Indication* triggers the UE to re-acquire *schedulingInfoList* contained in *SystemInformationBlockType1* for scheduling changes for *SystemInformationBlockType12.* The UE may or may not receive a *Paging* message including the *cmas-Indication* and/or *systemInfoModification* when *SystemInformationBlockType12* is no longer scheduled.
CMAS notification is contained in *SystemInformationBlockType12.* Segmentation can be applied for the delivery of a CMAS notification. The segmentation is fixed for transmission of a given CMAS notification within a cell (i.e. the same segment size for a given segment with the same *messageIdentifier, serialNumber* and *warningMessageSegment-Number*). E-UTRAN does not interleave transmissions of CMAS notifications, i.e. all segments of a given CMAS notification transmission are transmitted prior to those of another CMAS notification. A CMAS notification corresponds to a single *CB data* IE as defined according to TS 23.041 [37].

3GPP TS36.304 specifies discontinuous reception of paging as follows:

## 7 Paging

### *7.1 Discontinuous Reception for paging*

The UE may use Discontinuous Reception (DRX) in idle mode in order to reduce power consumption. One Paging Occasion (PO) is a subframe where there may be P-RNTI transmitted on PDCCH addressing the paging message. One Paging Frame (PF) is one Radio Frame, which may contain one or multiple Paging Occasion(s). When DRX is used the UE needs only to monitor one PO per DRX cycle.

PF and PO is determined by following formulae using the DRX parameters provided in System Information: PF is given by following equation:

$$\text{SFN mod } T = (T \text{ div } N)*(UE\_ID \text{ mod } N)$$

Index i_s pointing to PO from subframe pattern defined in 7.2 will be derived from following calculation:

$$i\_s = \text{floor}(UE\_ID/N) \text{ mod } Ns$$

System Information DRX parameters stored in the UE shall be updated locally in the UE whenever the DRX parameter values are changed in SI. If the UE has no IMSI, for instance when making an emergency call without USIM, the UE shall use as default identity UE_ID = 0 in the PF and i_s formulas above.

The following Parameters are used for the calculation of the PF and i_s:

- T: DRX cycle of the UE. T is determined by the shortest of the UE specific DRX value, if allocated by upper layers, and a default DRX value broadcast in system information. If UE specific DRX is not configured by upper layers, the default value is applied.
- nB: 4T, 2T, T, T/2, T/4, T/8, T/16, T/32.
- N: min(T,nB)
- Ns: max(1,nB/T)
- UE_ID: IMSI mod 1024.

1MSI is given as sequence of digits of type Integer (0..9), IMSI shall in the formulae above be interpreted as a decimal integer number, where the first digit given in the sequence represents the highest order digit.

For example:

$$IMSI = 12 \text{ (digit1=1, digit2=2)}$$

In the calculations, this shall be interpreted as the decimal integer "12", not "1x16+2 = 18".

### *7.2 Subframe Patterns*

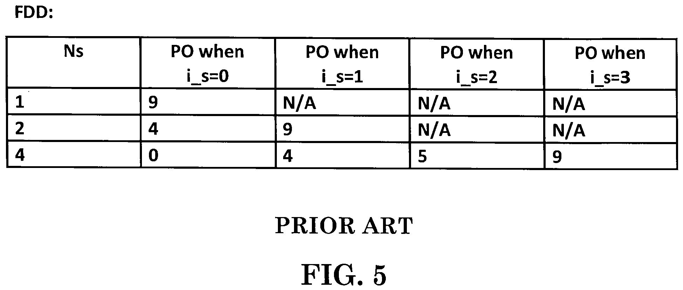

[See FIG. 5]

[See FIG. 6]

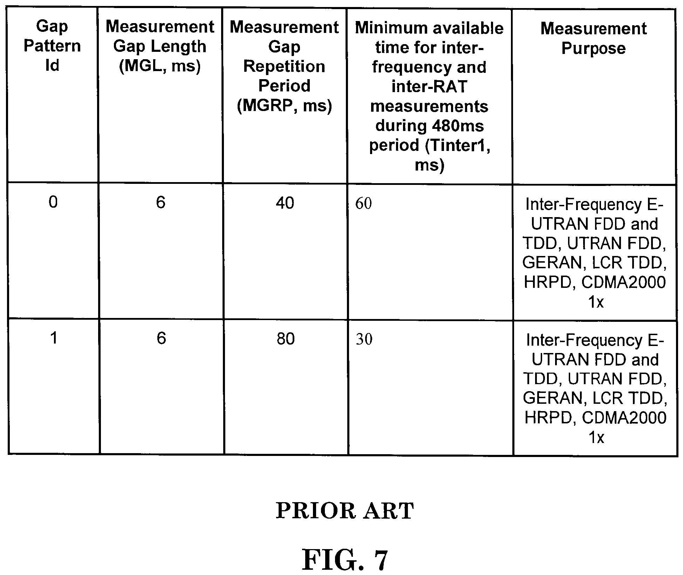

FIG. 5 is a reproduction of a table in Section 7.2 of 3GPP TS36.304 describing FDD (Frequency Division Duplex) subframe patterns. FIG. 6 is a reproduction of a table in Section 7.2 of 3GPP TS36.304 describing subframe patterns for all UL (Uplink)/DL (Downlink) configurations in a TDD (Time Division Duplex) context. FIG. 7 is a reproduction of Table 8.1.2.1-1 of 3GPP TS36.133 describing two measurement gap pattern configurations supported by the UE.

In addition, 3GPP TS36.331 specifies measurement gap configuration for a UE:

- *MeasGapConfig*

The IE *MeasGapConfig* specifies the measurement gap configuration and controls setup/ release of measurement gaps.

***MeasGapConfig* information element**

```
-- ASN1START
MeasGapConfig ::= CHOICE {
    release NULL,
    setup SEQUENCE {
        gapOffset CHOICE {
                gp0 INTEGER (0..39),
                gp1 INTEGER (0..79),
                ...
        }
    }
}
-- ASN1STOP
```

| ***MeasGapConfig* field descriptions** |
|---|
| **gapOffset**<br>Value *gapOffset* of *gp0* corresponds to gap offset of Gap Pattern Id "0" with MGRP = 40ms, *gapOffset* of *gp1* corresponds to gap offset of Gap Pattern Id "1" with MGRP = 80ms. Also used to specify the measurement gap pattern to be applied, as defined in TS 36.133 [16]. |

RAN1 agreed to use UL spectrum for D2D operations in FDD (Frequency Division Duplex). 3GPP R1-132503 proposes that network reserves periodically occurring uplink subframes for D2D discovery. 3GPP R1-132503 also proposes to interleave discovery subframes with small number of uplink subframes for minimizing the impact to low latency traffic (such as voice service). Furthermore, to enable harmonious coexistence between WAN (Wide Area Network) and D2D discovery, 3GPP R1-132503 alleges that the eNodeB should not schedule any PUSCH (Physical Uplink Shared Channel) transmission in discovery subframes to supposedly avoid interferences between D2D discovery signals and PUSCH transmissions.

Similar proposals for D2D discovery resources are also raised in R2-132526, which further proposes to broadcast the D2D discovery resource configuration in system information of a cell.

The above two contributions (R1-132503 and R2-132526) mainly discuss D2D impacts on WAN uplink transmissions. D2D impacts on WAN downlink transmissions are analyzed and the potential solutions are proposed below.

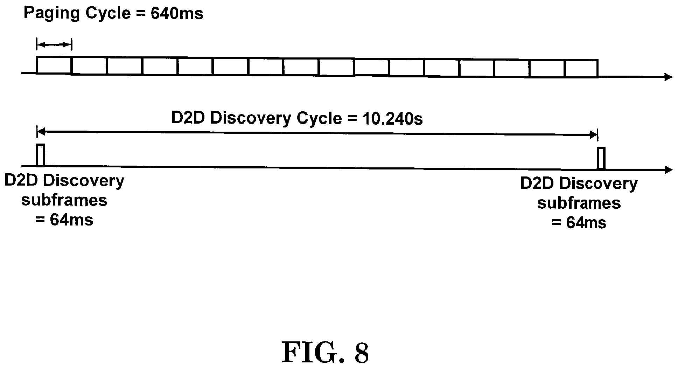

According to 3GPP TS36.304, paging occasions of UEs in a cell are distributed within a DRX (Discontinuous Reception) cycle (also called paging cycle) based on UE ID (i.e., IMSI (International Mobile Subscriber Identity) stored in USIM (Universal Subscriber Identity Module)). The default paging cycles include: 32, 64, 128, and 256 radio frames. 3GPP R1-132503 suggests that D2D discovery subframes occur periodically with a length of 64 subframes and a period of 10 seconds. In this situation, the D2D discovery subframes may collide with partial paging occasions within a paging cycle (64 radio frames or 640 ms) as shown in FIG. 8.

In the example illustrated in FIG. 8, part of the UEs in a cell would not be able to monitor paging messages and D2D discovery signals at the same time if the UEs are only capable of receiving a single transmission or have no extra RF front end for receiving D2D discovery signals. In this situation, UE behaviors would need to be specified.

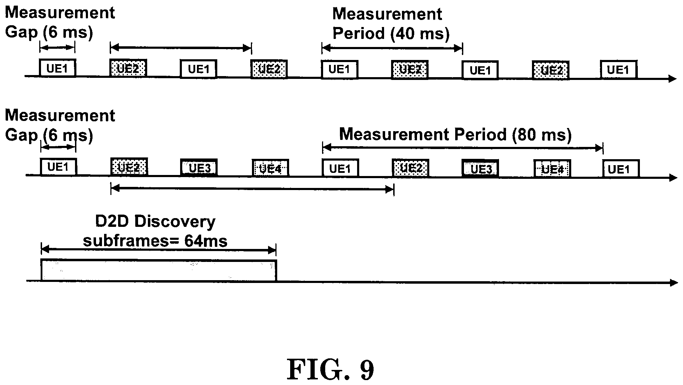

As proposed in 3GPP R1-132503, D2D discovery subframes occur periodically with a length of 64 subframes and a period of 10 seconds, while measurement gaps occur periodically with a gap length of 6 subframes and a gap period of either 40 or 80 ms. In addition, a gap offset is configured to each UE to distribute UEs within a gap period. Measurement gaps of a UE may collide with D2D discovery subframes as shown in FIG. 9.

If the collision occurs to a UE, the UE would not be able to perform measurements and monitor D2D discovery signals at the same time. In this situation, UE behaviors would need to be specified.

According to 3GPP TS36.331, ETWS notification and CMAS notification could occur at any point in time. Furthermore, a Paging message is used to inform UEs in RRC idle mode and connected mode about presence of an ETWS notification or a CMAS notification. If the UE receives a Paging message that includes the *etws-Indication*/*cmas-Indication,* the UE would start receiving the ETWS/CMAS notification according to *schedulingInfoList* contained in *SystemInformationBlockType1* (SIB1).

ETWS primary notification is contained in SystemInformationBlockType10 (SIB10) and ETWS secondary notification is contained in SystemInformationBlockType11 (SIB11), while CMAS notification is contained in SystemInformationBlockType12 (SIB12).

It is possible that ETWS notification and CMAS notification may be transmitted at the same time as D2D discovery signals. If a UE is only capable of receiving a single transmission or has no extra RF front end for receiving D2D discovery signals, the UE would not be able to receive ETWS/CMAS notification and D2D discovery signals simultaneously. In this situation, UE behaviors would need to be specified.

Although only one paging cycle of partial UEs in a cell would be affected when the collision occurs, it is quite important for a UE to receive paging messages as soon as possible because a paging message may contain a ETWS/CMAS notification. According to a first aspect useful for understanding the invention, since the ETWS/CMAS notification should be more important than D2D discovery signals, it should be beneficial for the UE to prioritize paging reception over D2D discovery signal reception if a paging occasion (PO) of the UE collides with a D2D discovery subframe. In other words, the UE monitors paging message(s) and does not monitor D2D discovery signal(s) in a PO of the UE if the PO of the UE collides with a D2D discovery subframe.

Alternatively, the UE may monitor D2D discovery signal(s) in the collided subframe and postpone paging message(s) monitoring to a PO not specified for the UE. With this option, the UE in idle mode could still receive system information change and ETWS/CMAS notification, while the UE may miss paging information for a terminating call. In one embodiment of the first aspect or its alternative, the UE starts monitoring the D2D discovery signals in D2D discovery subframes after the D2D discovery function is activated, and stops monitoring the D2D discovery signals after the D2D discovery function is deactivated.

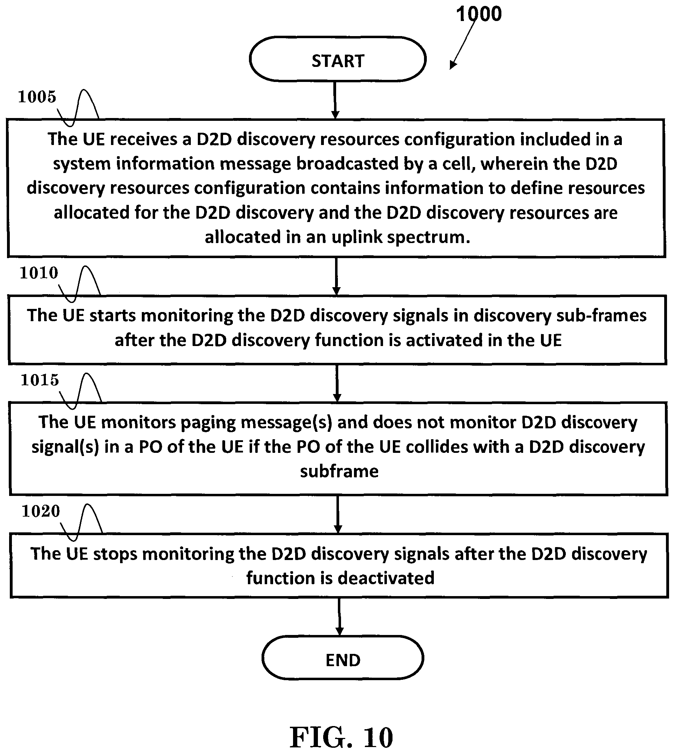

FIG. 10 is a flow chart 1000 in accordance with one first exemplary embodiment useful for understanding the invention. In general, a method is proposed to prevent a D2D-capable UE, with an activated D2D discovery function, from missing a paging message, which could carry ETWS/CMAS notification and could be fatal. Preferably, in step 1005, the UE receives a D2D discovery resources configuration included in a system information message broadcasted by a cell, wherein the D2D discovery resources configuration contains information to define resources allocated for D2D discovery. Further preferably, the D2D discovery resources are allocated in an uplink spectrum.

Thereafter, preferably, as shown in step 1010, the UE starts monitoring the D2D discovery signals in D2D discovery subframes after the D2D discovery function is activated in the UE. Further preferably, the D2D discovery subframes occur periodically. In step 1015, the UE monitors paging message(s) and does not monitor D2D discovery signal(s) in a paging occasion (PO) of the UE if the PO of the UE collides with a D2D discovery subframe. In addition, the PO could be a subframe where there may be P-RNTI (Paging Radio Network Temporary Identifier) transmitted on PDCCH (Physical Downlink Control Channel) addressing a paging message. Also, the UE could be in an RRC (Radio Resource Control) idle mode.

Finally, preferably, as shown in step 1020, the UE stops monitoring the D2D discovery signals after the D2D discovery function is deactivated.

Referring back to FIGS. 3 and 4, the device 300 includes a program code 312 stored in memory 310. In one first embodiment thereof, the CPU 308 could execute program code 312 to enable the UE to monitor paging message(s) and does not monitor D2D discovery signal(s) in a PO of the UE if the PO of the UE collides with a D2D discovery subframe. Furthermore, preferably, the CPU could execute program code 312 to enable the UE to start monitoring the D2D discovery signals in D2D discovery subframes after the D2D discovery function is activated in the UE, and stops monitoring the D2D discovery signals after the D2D discovery function is deactivated. In addition or alternatively, preferably, the CPU could execute program code 312 to enable the UE to receive a D2D discovery resources configuration included in a system information message broadcast by a cell, wherein the D2D discovery resources configuration contains information to define resources allocated for D2D discovery.

In addition, the CPU 308 can execute the program code 312 to perform all of the above-described actions and steps or others described herein, in particular those as described in paragraphs [0058] to [0062] above.

In general, measurement gaps are configured to a UE for inter-frequency and/or inter-RAT measurements and the results of these measurements are used for handover decision. According to a second aspect useful for understanding the invention, since a UE could still monitor D2D discovery signals in the next D2D discovery subframe period to find UE-interested parties, it should be beneficial in terms of mobility robustness for the UE to prioritize measurements over D2D discovery if a measurement gap collides with any D2D discovery subframe. In other words, the UE performs measurement and does not monitor D2D discovery signal(s) during a measurement gap if the measurement gap collides with any D2D discovery subframe. In one embodiment thereof, the UE starts monitoring the D2D discovery signals in D2D discovery subframes after the D2D discovery function is activated, and stops monitoring the D2D discovery signals after the D2D discovery function is deactivated.

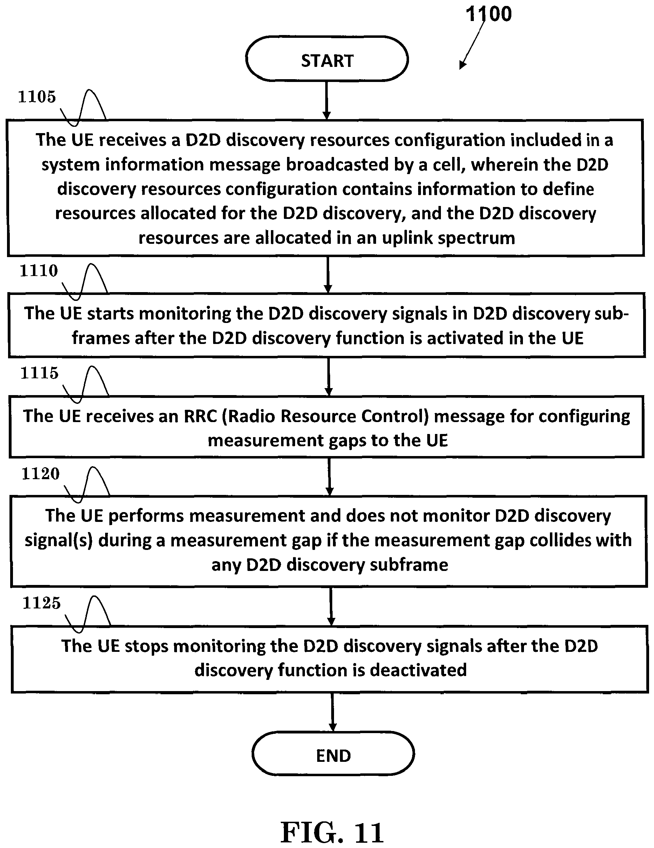

FIG. 11 is a flow chart 1100 in accordance with one second exemplary embodiment useful for understanding the invention. In general, a method is proposed to avoid degrading or to improve mobility performance of a UE with an activated D2D discovery function. Preferably, in step 1105, the UE receives a D2D discovery resources configuration included in a system information message broadcasted by a cell, wherein the D2D discovery resources configuration contains information to define resources allocated for D2D discovery. Further preferably, the D2D discovery resources are allocated in an uplink spectrum.

Thereafter, preferably, as shown in step 1110, the UE starts monitoring the D2D discovery signals in D2D discovery subframes after the D2D discovery function is activated in the UE. Further preferably, the D2D discovery subframes occur periodically. In step 1115, the UE receives an RRC message for configuring measurement gaps to the UE. Alternatively, step 1115 may occur before step 1110. In step 1120, the UE performs measurement and does not monitor D2D discovery signal(s) during a measurement gap if the measurement gap collides with any D2D discovery subframe. Preferably, the RRC message contains information to indicate a gap offset and a gap pattern.

Finally, preferably, as shown in step 1125, the UE stops monitoring the D2D discovery signals after the D2D discovery function is deactivated.

Referring back to FIGS. 3 and 4, the device 300 includes a program code 312 stored in memory 310. In one second embodiment thereof useful for understanding the invention, the CPU 308 could execute program code 312 to execute to enable the UE to (i) receive an RRC message for configuring measurement gaps to the UE, and (ii) perform measurement and does not monitor D2D discovery signal(s) during a measurement gap if the measurement gap collides with any D2D discovery subframe. Furthermore, preferably, the CPU could execute program code 312 to enable the UE to start monitoring the D2D discovery signals in D2D discovery subframes after the D2D discovery function is activated in the UE, and stop monitoring the D2D discovery signals after the D2D discovery function is deactivated. In addition or alternatively, preferably, the CPU could execute program code 312 to execute to enable the UE to receive a D2D discovery resources configuration included in a system information message broadcast by a cell, wherein the D2D discovery resources configuration contains information to define resources allocated for D2D discovery.

In addition, the CPU 308 can execute the program code 312 to perform all of the above-described actions and steps or others described herein, in particulay those described in paragraphs [0065] to [0068] above.

According to a third aspect according to the invention, since ETWS/CMAS notification should be more important than D2D discovery signals, it should be beneficial for the UE to prioritize ETWS/CMAS notification reception over D2D discovery signal reception if the subframe for receiving ETWS/CMAS notification collides with a D2D discovery subframe. In other words, the UE receives ETWS/CMAS notification and does not monitor D2D discovery signal(s) if the subframe for receiving ETWS/CMAS notification collides with a D2D discovery subframe.

In one embodiment thereof, there are two categories of ETWS notifications, including ETWS primary notification and ETWS secondary notification. The ETWS primary notification might be contained in *SystemInformationBlockType1*0 (SIB10) and the ETWS secondary notification might be contained in *SystemInformationBlockType11* (SIB11), while the CMAS notification might be contained in *SystemInformationBlockType12* (SIB12). Also, preferably, the UE starts receiving the ETWS or the CMAS notification according to a scheduling Info list contained in a *SystemInformationBlockType1* (SIB1) if the UE receives the Paging message that includes an *etws-Indication* or a *cmas-Indication*.

Besides, it may also be beneficial for the UE to prioritize reception of other SIB types over D2D discovery signal reception due to reception of a Paging message including system Info Modification. Additionally or alternatively, preferably, the UE starts monitoring the D2D discovery signals in D2D discovery subframes after the D2D discovery function is activated and stops monitoring the D2D discovery signals after the D2D discovery function is deactivated.

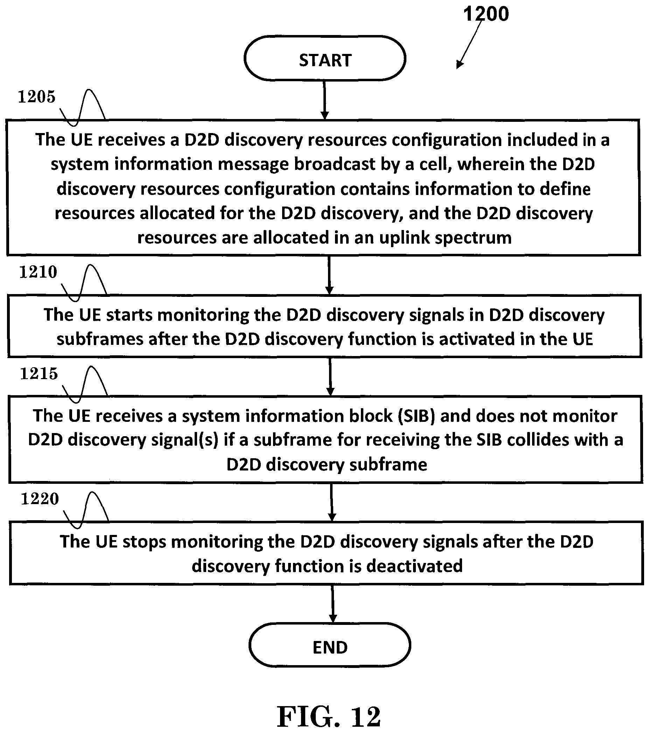

FIG. 12 is a flow chart 1200 in accordance with one third exemplary embodiment according to the present invention. In general, a method is proposed to prevent a D2D-capable UE, with an activated D2D discovery function, from missing the ETWS/CMAS notification. Preferably, in step 1205, the UE receives a D2D discovery resources configuration included in a system information message broadcasted by a cell, wherein the D2D discovery resources configuration contains information to define resources allocated for D2D discovery. Further preferably, the D2D discovery resources are allocated in uplink spectrum.

Thereafter, preferably, as shown in step 1210, the UE starts monitoring the D2D discovery signals in D2D discovery subframes after the D2D discovery function is activated in the UE. Further preferably, the D2D discovery subframes occur periodically. In step 1215, the UE receives a system information block (SIB) and does not monitor D2D discovery signal(s) if a subframe for receiving the SIB collides with a D2D discovery subframe. Preferably, the SIB contains an ETWS (Earthquake and Tsunami Warning System) notification or a CMAS (Commercial Mobile Alert Service) notification.

Finally, preferably, as shown in step 1220, the UE stops monitoring the D2D discovery signals after the D2D discovery function is deactivated.

Referring back to FIGS. 3 and 4, the device 300 includes a program code 312 stored in memory 310. In one third embodiment thereof according to the invention, the CPU 308 could execute program code 312 to enable the UE to receive a system information block (SIB) and does not monitor D2D discovery signal(s) if a subframe for receiving the SIB collides with a D2D discovery subframe. Furthermore, preferably, the CPU 308 could execute program code 312 to enable the UE to start monitoring the D2D discovery signals in D2D discovery subframes after the D2D discovery function is activated in the UE, and stops monitoring the D2D discovery signals after the D2D discovery function is deactivated. In addition or alternatively, preferably, the CPU 308 could execute program code 312 to enable the UE to receive a D2D discovery resources configuration included in a system information message broadcast by a cell, wherein the D2D discovery resources configuration contains information to define resources allocated for D2D discovery.

In addition, the CPU 308 can execute the program code 312 to perform all of the above-described actions and steps or others described herein, in particular those described in paragraphs [0071] to [0076] above.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

**Claims**

1. A method for supporting device to device, in the following also referred to as D2D, discovery, wherein a D2D discovery function is activated in a User Equipment, in the following also referred to as UE, comprising:

    the UE receives a D2D discovery resources configuration included in a system information message broadcasted by a cell; and
    the UE monitors paging message(s) and does not monitor D2D discovery signal(s) in a paging occasion, in the following also referred to as PO, of the UE if the PO of the UE collides with a D2D discovery subframe, wherein the paging message(s) is used to inform the UE about presence of an Earthquake and Tsunami Warning System, in the following also referred to as ETWS, notification or a Commercial Mobile Alert Service, in the following also referred to as CMAS, notification;
    **characterized by**:
    the UE receives a system information block, in the following also referred to as SIB, and does not monitor D2D discovery signal(s) if a subframe for receiving the SIB collides with a D2D discovery subframe (1215).

2. The method of claim 1, wherein the SIB contains the ETWS notification or the CMAS notification.

3. The method of claim 2, wherein if the UE receives a paging message that includes an indication of ETWS or CMAS, the UE receives the ETWS notification or the CMAS notification contained in the SIB according to scheduling information contained in a system information block type1.

4. The method of claim 1, wherein the SIB indicates allocation of D2D discovery subframes.

5. The method of claim 4, wherein the UE receives the SIB due to reception of a paging message including an indication of system information modification.

6. The method of any one of claims 1 to 5, further comprising:
    the UE starts monitoring the D2D discovery signals in D2D discovery subframes after the D2D discovery function is activated in the UE (1210), and stops monitoring the D2D discovery signals after the D2D discovery function is deactivated (1220).

7. The method of any one of claims 1 to 6,
    wherein the D2D discovery resources configuration contains information to define resources allocated for the D2D discovery, and the D2D discovery resources are allocated in an uplink spectrum (1205).

8. The method of any one of claims 1 to 7, wherein the D2D discovery subframes occur periodically.

9. A communication device (300) for supporting device to device, in the following also referred to as D2D, discovery, wherein a D2D discovery function is activated in aUser Equipment , in the following also referred to as UE, the communication device comprising:

    a control circuit (306);
    a processor (308) installed in the control circuit (306);
    a memory (310) installed in the control circuit (306) and
    operatively coupled to the processor (308);

    **characterized in that** the processor (308) is configured to execute a program code (312) stored in the memory (310) to enable the UE to perform the method steps as defined in any one of claims 1 to 8.

**Patentansprüche**

1. Verfahren zum Unterstützen einer Vorrichtung-zu-Vorrichtung-, im Folgenden auch als D2D bezeichnet, Erkennung, wobei eine D2D-Erkennungsfunktion in einer Teilnehmerausrüstung, im Folgenden auch als UE bezeichnet, aktiviert wird, umfassend:

   die UE empfängt eine D2D-Erkennungsressourcenkonfiguration, die in einer Systeminformationsnachricht enthalten ist, die durch eine Zelle übertragen wird; und
   die UE beobachtet (eine) Paging-Nachricht(en) und beobachtet (ein) D2D-Erkennungssignal(e) in einer Paging-Möglichkeit, im Folgenden auch als PO bezeichnet, der UE nicht, wenn die PO der UE mit einem D2D-Erkennungsunterrahmen kollidiert, wobei die Paging-Nachricht(en) verwendet wird (werden), um die UE über ein Vorhandensein einer Erdbeben- und Tsunamiwarnsystem-, im Folgenden auch als ETWS bezeichnet, Benachrichtigung oder einer geschäftlicher-Mobilalarmdienst-, im Folgenden auch als CMAS bezeichnet, Benachrichtigung zu informieren;
   **gekennzeichnet durch**:
   die UE empfängt einen Systeminformationsblock, im Folgenden auch als SIB bezeichnet, und beobachtet (ein) D2D-Erkennungssignal(e) nicht, wenn ein Unterrahmen zum Empfangen des SIBs mit einem D2D-Erkennungsunterrahmen kollidiert (1215).

2. Verfahren gemäß Anspruch 1, wobei der SIB die ETWS-Benachrichtigung oder die CMAS-Benachrichtigung aufweist.

3. Verfahren gemäß Anspruch 2, wobei, wenn die UE eine Paging-Nachricht empfängt, welche eine Anzeige eines ETWS oder CMAS enthält, die UE die ETWS-Benachrichtigung oder die CMAS-Benachrichtigung, die in dem SIB enthalten ist, gemäß Zeitplanungsinformationen empfängt, die in einem Systeminformationsblocktyp1 enthalten sind.

4. Verfahren gemäß Anspruch 1, wobei der SIB eine Zuweisung von D2D-Erkennungsunterrahmen anzeigt.

5. Verfahren gemäß Anspruch 4, wobei die UE den SIB aufgrund eines Empfangs einer Paging-Nachricht empfängt, die eine Anzeige einer Systeminformationsmodifikation enthält.

6. Verfahren gemäß einem der Ansprüche 1 bis 5, weiter umfassend:
   die UE beginnt, die D2D-Erkennungssignale in D2D-Erkennungsunterrahmen zu beobachten, nachdem die D2D-Erkennungsfunktion in der UE aktiviert ist (1210), und hört auf, die D2D-Erkennungssignale zu beobachten, nachdem die D2D-Erkennungsfunktion deaktiviert ist (1220).

7. Verfahren gemäß einem der Ansprüche 1 bis 6,
   wobei die D2D-Erkennungsressourcenkonfiguration Informationen aufweist, um Ressourcen zu definieren, die für die D2D-Erkennung zugewiesen werden, und die D2D-Erkennungsressourcen in einem Uplink-Spektrum zugewiesen werden (1205).

8. Verfahren gemäß einem der Ansprüche 1 bis 7, wobei die D2D-Erkennungsunterrahmen periodisch auftreten.

9. Kommunikationsvorrichtung (300) zum Unterstützen einer Vorrichtung-zu-Vorrichtung-, im Folgenden auch als D2D bezeichnet, Erkennung, wobei eine D2D-Erkennungsfunktion in einer Teilnehmerausrüstung, im Folgenden auch als UE bezeichnet, aktiviert wird, wobei die Kommunikationsvorrichtung aufweist:

   eine Steuerungsschaltung (306);
   einen Prozessor (308), der in der Steuerungsschaltung (306) installiert ist; und
   einen Speicher (310), der in der Steuerungsschaltung (306) installiert und betriebsfähig mit dem Prozessor (308) verbunden ist;
   **dadurch gekennzeichnet, dass** der Prozessor (308) eingerichtet ist, einen Programm-Code (312), der in dem Speicher (310) gespeichert ist, auszuführen, um der UE zu ermöglichen, die in einem der vorstehenden Ansprüche 1 bis 8 definierten Verfahrensschritte auszuführen.

**Revendications**

1. Procédé de prise en charge de découverte de dispositif à dispositif, ci-après également appelé D2D, dans lequel une fonction de découverte D2D est activée dans un Équipement Utilisateur, ci-après également appelé UE, comprenant :

   la réception par l'UE d'une configuration de ressources de découverte D2D incluse dans un message d'informations système diffusé par une cellule ; et
   la surveillance par l'UE d'un ou de plusieurs message(s) de radiomessagerie et la non surveillance d'un signal ou de plusieurs signaux de découverte D2D lors d'une occasion de radiomessagerie, ci-après également appelée PO, de l'UE si la PO de l'UE entre en collision avec une sous-trame de découverte D2D, dans lequel le(s) message(s) de radiomessagerie est/sont utilisé(s) pour informer l'UE de la présence d'une notification de système d'alerte aux tremblements de terre et aux tsunamis, ci-après également appelé ETWS, ou d'une notification de service d'alerte mobile commercial, ci-après également appelé CMAS ;
   **caractérisé par** :
   la réception par l'UE d'un bloc d'informations système, ci-après également appelé SIB, et la non surveillance d'un signal ou de plusieurs signaux de découverte D2D si une sous-trame destinée à recevoir le SIB entre en collision avec une sous-trame de découverte D2D (1215).

2. Procédé selon la revendication 1, dans lequel le SIB contient la notification ETWS ou la notification CMAS.

3. Procédé selon la revendication 2, dans lequel si l'UE reçoit un message de radiomessagerie qui comprend une indication ETWS ou CMAS, l'UE reçoit la notification ETWS ou la notification CMAS contenue dans le SIB conformément à des informations de programmation contenues dans un type de bloc d'informations système.

4. Procédé selon la revendication 1, dans lequel le SIB indique l'allocation de sous-trames de découverte D2D.

5. Procédé selon la revendication 4, dans lequel l'UE reçoit le SIB en raison de la réception d'un message de radiomessagerie comprenant une indication de modification d'informations système.

6. Procédé selon l'une quelconque des revendications 1 à 5, comprenant en outre :
   le démarrage par l'UE de la surveillance des signaux de découverte D2D dans des sous-trames de découverte D2D après l'activation de la fonction de découverte D2D dans l'UE (1210), et l'arrêt de surveillance des signaux de découverte D2D après la désactivation de la fonction de découverte D2D (1220).

7. Procédé selon l'une quelconque des revendications 1 à 6, dans lequel la configuration de ressources de découverte D2D contient des informations pour définir des ressources allouées pour la découverte D2D, et les ressources de découverte D2D sont allouées dans un spectre de liaison montante (1205).

8. Procédé selon l'une quelconque des revendications 1 à 7, dans lequel les sous-trames de découverte D2D se produisent périodiquement.

9. Dispositif de communication (300) de prise en charge d'une découverte de dispositif à dispositif, ci-après également appelé D2D, dans lequel une fonction de découverte D2D est activée dans un Équipement Utilisateur, ci-après également appelé UE, le dispositif de communication comprenant :

   un circuit de commande (306) ;
   un processeur (308) installé dans le circuit de commande (306) ;
   une mémoire (310) installée dans le circuit de commande (306) et fonctionnellement couplée au processeur (308) ;
   **caractérisé en ce que** le processeur (308) est configuré pour exécuter un code de programme (312) stocké dans la mémoire (310) pour permettre à l'UE d'exécuter les étapes de procédé selon l'une quelconque des revendications 1 à 8.

**FIG. 1**

**FIG. 2**

EP 2 887 711 B1

_300_

```
┌─────────────────────────────────────────────────┐
│                                                   │
│   ┌──────────────┐        ┌──────────────┐       │
│   │    INPUT     │        │   OUTPUT     │       │
│   │   DEVICE     │        │   DEVICE     │       │
│   │     302      │        │     304      │       │
│   └──────┬───────┘        └──────┬───────┘       │
│          ↕                       ↕               │
│   ┌──────────────────────────────────────────┐  │
│   │        CONTROL CIRCUIT 306                │  │
│   │   ┌──────────────────────────────────┐   │  │
│   │   │           CPU 308                │   │  │
│   │   └──────────────┬───────────────────┘   │  │
│   │                  ↕                        │  │
│   │   ┌──────────────────────────────────┐   │  │
│   │   │        MEMORY 310                │   │  │
│   │   │  ┌────────────────────────────┐  │   │  │
│   │   │  │  PROGRAM CODE 312          │  │   │  │
│   │   │  └────────────────────────────┘  │   │  │
│   │   └──────────────────────────────────┘   │  │
│   └──────────────────────┬───────────────────┘  │
│                          ↕                       │
│   ┌──────────────────────────────────────────┐  │
│   │          TRANSCEIVER 314                 │  │
│   └──────────────────────────────────────────┘  │
│                                                   │
└─────────────────────────────────────────────────┘
```

## FIG. 3

PROGRAM CODE *312*

APPLICATION LAYER *400*

LAYER 3 *402*

LAYER 2 *404*

LAYER 1 *406*

FIG. 4

**FDD:**

| Ns | PO when i_s=0 | PO when i_s=1 | PO when i_s=2 | PO when i_s=3 |
|---|---|---|---|---|
| 1 | 9 | N/A | N/A | N/A |
| 2 | 4 | 9 | N/A | N/A |
| 4 | 0 | 4 | 5 | 9 |

## PRIOR ART

## FIG. 5

TDD (all UL/DL configurations):

| Ns | PO when i_s=0 | PO when i_s=1 | PO when i_s=2 | PO when i_s=3 |
|---|---|---|---|---|
| 1 | 0 | N/A | N/A | N/A |
| 2 | 0 | 5 | N/A | N/A |
| 4 | 0 | 1 | 5 | 6 |

PRIOR ART

FIG. 6

| Gap Pattern Id | Measurement Gap Length (MGL, ms) | Measurement Gap Repetition Period (MGRP, ms) | Minimum available time for inter-frequency and inter-RAT measurements during 480ms period (Tinter1, ms) | Measurement Purpose |
|---|---|---|---|---|
| 0 | 6 | 40 | 60 | Inter-Frequency E-UTRAN FDD and TDD, UTRAN FDD, GERAN, LCR TDD, HRPD, CDMA2000 1x |
| 1 | 6 | 80 | 30 | Inter-Frequency E-UTRAN FDD and TDD, UTRAN FDD, GERAN, LCR TDD, HRPD, CDMA2000 1x |

## PRIOR ART

## FIG. 7

**Paging Cycle = 640ms**

**D2D Discovery Cycle = 10.240s**

D2D Discovery
subframes
= 64ms

D2D Discovery
subframes
= 64ms

# FIG. 8

**Measurement
Gap (6 ms)**

**Measurement
Period (40 ms)**

| UE1 | | UE2 | | UE1 | | UE2 | | UE1 | | UE2 | | UE1 | | UE2 | | UE1 |

**Measurement
Gap (6 ms)**

**Measurement Period (80 ms)**

| UE1 | | UE2 | | UE3 | | UE4 | | UE1 | | UE2 | | UE3 | | UE4 | | UE1 |

**D2D Discovery
subframes= 64ms**

# FIG. 9

1000

START

1005

The UE receives a D2D discovery resources configuration included in a system information message broadcasted by a cell, wherein the D2D discovery resources configuration contains information to define resources allocated for the D2D discovery and the D2D discovery resources are allocated in an uplink spectrum.

1010

The UE starts monitoring the D2D discovery signals in discovery sub-frames after the D2D discovery function is activated in the UE

1015

The UE monitors paging message(s) and does not monitor D2D discovery signal(s) in a PO of the UE if the PO of the UE collides with a D2D discovery subframe

1020

The UE stops monitoring the D2D discovery signals after the D2D discovery function is deactivated

END

# FIG. 10

1100

START

1105

The UE receives a D2D discovery resources configuration included in a system information message broadcasted by a cell, wherein the D2D discovery resources configuration contains information to define resources allocated for the D2D discovery, and the D2D discovery resources are allocated in an uplink spectrum

1110

The UE starts monitoring the D2D discovery signals in D2D discovery sub-frames after the D2D discovery function is activated in the UE

1115

The UE receives an RRC (Radio Resource Control) message for configuring measurement gaps to the UE

1120

The UE performs measurement and does not monitor D2D discovery signal(s) during a measurement gap if the measurement gap collides with any D2D discovery subframe

1125

The UE stops monitoring the D2D discovery signals after the D2D discovery function is deactivated

END

# FIG. 11

**1200**

START

**1205**

The UE receives a D2D discovery resources configuration included in a system information message broadcast by a cell, wherein the D2D discovery resources configuration contains information to define resources allocated for the D2D discovery, and the D2D discovery resources are allocated in an uplink spectrum

**1210**

The UE starts monitoring the D2D discovery signals in D2D discovery subframes after the D2D discovery function is activated in the UE

**1215**

The UE receives a system information block (SIB) and does not monitor D2D discovery signal(s) if a subframe for receiving the SIB collides with a D2D discovery subframe

**1220**

The UE stops monitoring the D2D discovery signals after the D2D discovery function is deactivated

END

**FIG. 12**

**EP 2 887 711 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- E-UTRA RRC protocol specification. *TS36.331 V11.4.0*
- WID on Proposal for a study on Proximity-based Services. *SP-110638*
- Feasibility Study for Proximity Services (ProSe). *TR22.803-c20*
- Techniques for D2D Discovery. *R1-132503*
- Resource Configuration & Selection for D2D Direct Discovery. *R2-132526*
- UE state for D2D Direct Discovery. *R2-133215*
- Discussion on idle mode UE Discovery. *R2-133382*
- D2D Discovery. *R2-133482*
- E-UTRA UE procedures in idle mode. *TS36.304 V11.3.0*
- E-UTRA Requirements for support of radio resource management. *TS36.133 V11.4.0*